# EUROPEAN PATENT SPECIFICATION

(11) **EP 3 556 045 B1**
(45) Date of publication and mention of the grant of the patent: **17.06.2020**
(21) Application number: 17821863.2
(22) Date of filing: 13.12.2017
(51) Int. Cl.: H04L 9/08, H04L 29/08, H04L 29/06

(54) **P2P NETWORK DATA DISTRIBUTION AND RETRIEVAL USING BLOCKCHAIN LOG**
P2P-NETZWERKDATENVERTEILUNG UND ABRUF MITTELS BLOCKCHAIN-PROTOKOLL
DISTRIBUTION ET RÉCUPÉRATION DE DONNÉES DE RÉSEAU P2P À L'AIDE D'UN JOURNAL DE CHAÎNES DE BLOCS

(30) Priority: 15.12.2016 LU 93377
(43) Date of publication of application: 23.10.2019
(73) Proprietor: Luxembourg Institute of Science and Technology (LIST), 4362 Esch-sur-Alzette (LU)
(72) Inventor: ROTH, Uwe, 54293 Trier (DE)
(74) Representative: Lecomte & Partners
(86) International application number: PCT/EP2017/082625
(87) International publication number: WO 2018/109010

(56) References cited:
- US-A1- 2003 084 020
- US-A1- 2015 261 973
- US-A1- 2016 162 897
- US-A1- 2016 254 910
- PETER LINDER: "DEcryption Contract ENforcement Tool (DECENT): A Practical Alternative to Government Decryption Backdoors", INTERNATIONAL ASSOCIATION FOR CRYPTOLOGIC RESEARCH,, vol. 20160401:160351, 22 March 2016 (2016-03-22), pages 1-18, XP061020263,

## Description

### Technical field

The invention is directed to the field of computer peer-to-peer networks and more particularly to the field of data sharing between different partners or peer nodes through a computer network.

### Background art

Peer-to-peer (P2P) technologies constitute an alternative to traditional centralized information systems because of their potential to scale to realistic sizes and their inherent fault-tolerances. In P2P systems, computers communicate directly with each other, rather than through servers that can become performance bottlenecks and single points of failure. Self-organizing P2P networks have proven highly adaptable to changes in network connectivity and resilient to node or network failures. While current P2P technology may provide scalable and robust distributed data object storage, current P2P solutions are not widely used due, at least in part, to security concerns. For example, P2P networks are generally used for freely sharing data, such as information or music. However, P2P networks generally do not provide the needed security and access control with query functionality that is required for more sophisticated information systems.

Prior art patent document published US 2005/0240591 A1 discloses a peer-to-peer networking system forming a large repository with a distributed object data access mechanism granting access to data objects to authorized users. The data can be split and distributed according to a hash table to different peer nodes. The data can also be encrypted using a secret encryption key that is split into a series of secret shares distributed among the peer nodes. By retrieving these secret shares, the corresponding secret key can be reconstructed and the encrypted data can be decrypted and accessed to. This provides the advantage that a complete version of the secret encryption key is never transmitted across the network. The security of such a network remains however limited in that a malicious node could request copies of each of the secret shares for reconstructing the encryption key.

Prior art patent document US 2016/162897 A1 discloses splitting a secret into shares using a blockchain network.

Prior art patent document US 2015/261973 A1 discloses splitting encrypted data and the key used for their encryption.

### Summary of invention

### Technical Problem

The invention has for technical problem to provide to a solution to at least one shortcoming of the above cited prior art. More specifically, the invention has for technical problem to provide a P2P network with an increased security and transparency with regard to the access by a peer node to encrypted data.

### Technical solution

The invention is directed to a method of distributing and retrieving data on a computer network with peer nodes, comprising: (a) encrypting, with a secret key, a file containing said data; (b) splitting the encrypted file into blocks and splitting the secret key into secret shares; (c) distributing the blocks and the secret shares to the peer nodes; (d) upon request of a client to access the file, retrieving via one of the peer nodes the encrypted blocks for reconstructing the encrypted file, retrieving at least some of the secret shares for reconstructing the secret key, and decrypting the encrypted file with the reconstructed secret key; wherein the peer nodes share a blockchain so as to form a blockchain network; at step (a), the secret shares are transmitted to the peer nodes via messages sent over the blockchain network; and at step (d), requesting and retrieving the secret shares is done via messages sent over the blockchain network.

The blockchain forms a decentralized ledger storing information forever without any possibility of fraudulent or hidden addition, change or deletion of content.

A blockchain is to be understood as a database or data structure of data records with the following properties: Each node of a blockchain network maintains a copy of the database or data structure. A majority of equal nodes reach consensus about the current state of the database or data structure. For each two data records in the agreed database or data structure, it is known which of the two data records was added earlier and which was added later to the agreed database or data structure. As a consequence, a new data record that is added to the agreed database or data structure is the latest data record in the agreed database or data structure and it is not possible to add a data record to the agreed database or data structure in a way, that any other existing data record in the agreed database or data structure is seen as a data record that was added later to the agreed database or data structure. It is not possible to modify or alter any data record that has been added already to the agreed database or data structure. It is not possible to delete any data record that has been added already to the agreed database or data structure.

A blockchain log is a decentralized message log stored inside a blockchain. The invention is defined by the appended claims.

### Advantages of the invention

The invention is particularly interesting in that the provider of files in the network does not need to be reachable during the access of the data while being able to trace the access to its files by the network partners. Also, access to the files is not restricted to only some nodes but well to all nodes. No particular authorisation is required. Also no central managing and controlling instance is required.

The use of a blockchain network that records the data transmittal, request and retrieval actions by the partners provides a useful and interesting solution to the problem of keeping control of the information and the transparency of their access. Blockchain technology is usually used for transferring assets (e.g., bitcoins) between partners. Here that technology is implemented in a particular manner so as to provide a complete ledger or logger of all information exchanged in relation with the secret shares for decrypting the data, without the need of a central logging instance. Request for and access to secret shares by a node are put on the same level as having undeniable access to the unencrypted file by that node.

### Brief description of the drawings

Figure 1 illustrates the architecture of a P2P network that operates a method for distributing and retrieving data according to the invention.
Figure 2 is a flow chart illustrating the encryption of a file, according to the invention.
Figure 3 illustrates the structure of the file storage tables on each peer node of the network, according to the invention.
Figure 4 illustrates the structure of the secret storage tables on each peer node of the network, according to the invention.
Figure 5 illustrates an exemplary structure of a blockchain log on the network of figure 1, in accordance with the invention.
Figure 6 is a flow chart illustrating the retrieval and decryption of a file according to the invention.
Figure 7 illustrates different messages sent on the blockchain network of figure 1, in accordance with the invention.

### Description of an embodiment

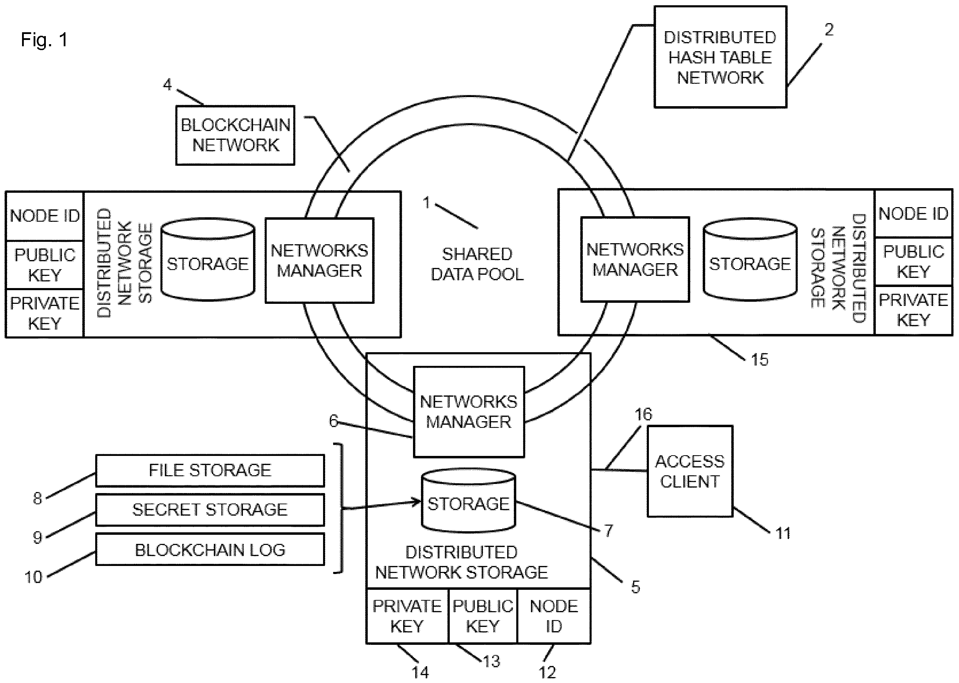

An embodiment of the invention will be described in relation with figures 1 to 7. In these figures reference numbers are used for designating physical elements and also information elements like file ID, secret share, etc. For these information elements, different reference numbers are used designating the same information at different points of time and/or at different locations in the computer storage and/or treatment of the information. This is for the sake of clarity and shall not be construed as a lack of consistency.

Figure 1 illustrates the architecture of a P2P network in accordance with the invention. The network forms a shared data pool 1 comprising a series of Distributed Network Storage Systems 5 and 15, forming peer nodes. Each node 5 and 15 owns a unique identifier or Node ID 12 and a key pair that consist of a Private Key 14 and a Public Key 13. The Private and Public Key form an asymmetric cryptographic system that uses pairs of keys: public keys which may be disseminated widely, and private keys which are known only to the owner. Such systems are as such well known to the skilled person. The Node ID 12 and the Public Key 13 are known by the other nodes, while the Private Key 14 is kept secret in the node. Each node 5 and 15 comprises a Networks Manager 6 and a data internal Storage 7.

The Networks Manager 6 of a node manages two networks: a Blockchain Network 4 that is used to have a synchronised and agreed Blockchain Log 10 via all nodes and a Distributed Hash Table Network 2 that is used to distribute files amongst partner nodes. Blockchain technology is as such known to the skilled person, in particular for transferring assets (e.g., bitcoins) between partners. Distributed Hash Table Networks is as such known to the skilled person, in particular for decentralized and distributed efficient storage of (key, value) pairs.

The process of uploading and accessing of files inside the Shared Data Pool will be described in relation with figures 1-7.

With reference to figure 1, a file that is added by an Access Client 11 to the Shared Data Pool 1 is uploaded to its local Distributed Network Storage Node 5 via a special upload protocol 16.

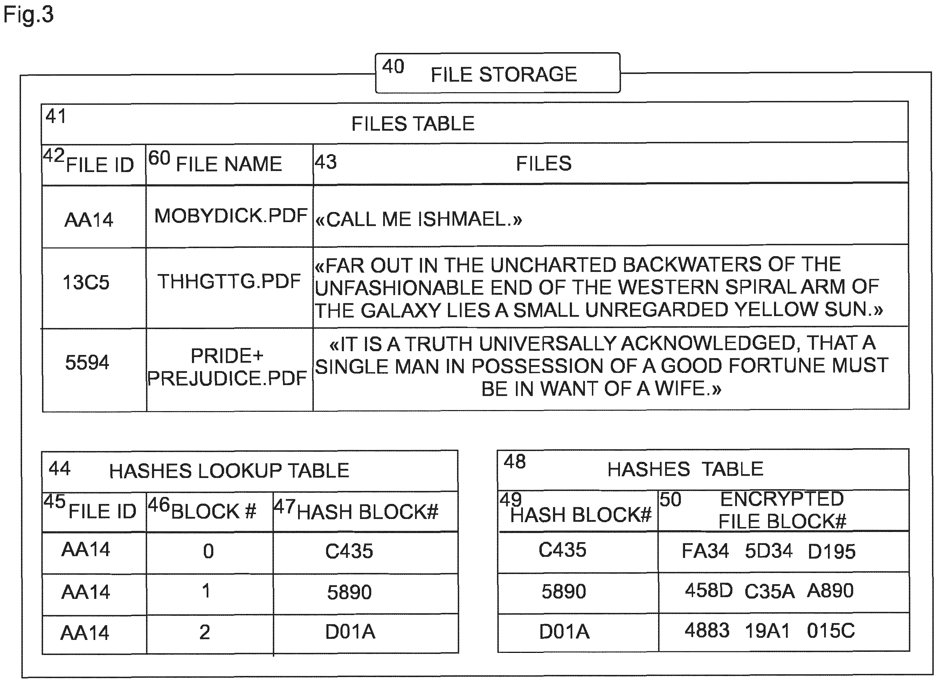

The file is added to the Files Table 41 (figure 3) in the File Storage 8/40 of the internal Storage 7.

With reference to figure 3, the entry in the Files Table 41 consists of a unique File ID 42, the File Name of the file 60, and the File itself 43.

On the basis of the Distributed Hash Table Algorithm, the Node shares the file with other nodes in the Distributed Hash Table network 2 (figure 1).

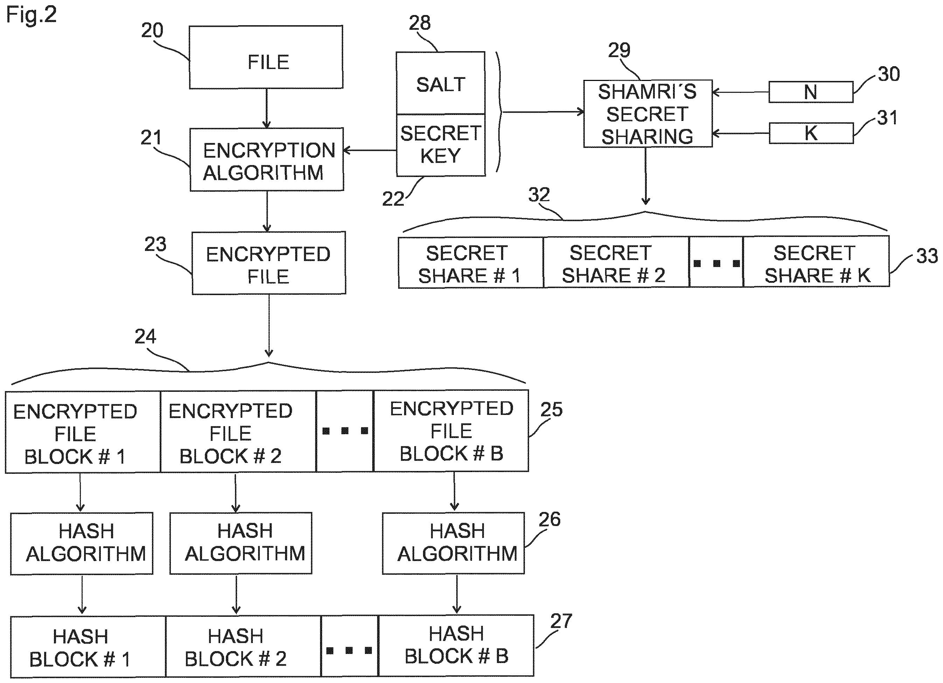

With reference to figure 2, to ensure confidentiality of the file before sharing it with other nodes, the File 20 is first Encrypted 21 with the use of a Secret Key 22 that is unique per file. The encrypted file 23 is then split into blocks 24 with a fixed size per block 25. The Distributed Hash Table Algorithm foresees, that on the basis of a given Hash Algorithm 26 the Hash value 27 for each Block 25 is calculated. The Block Number 46 (figure 3) and its associated Hash Value 47 (figure 3), together with the File ID 45 are shared amongst all nodes via the Distributed Hash Table Network 2 (figure 1) and stored in the local Hashes Lookup Table 44 of each node (figure 3).

The blocks of the encrypted file are distributed via the Networks Manager of the node 6 (figure 1) amongst the involved partner nodes on the basis of the Distributed Hash Table Network 2. In dependence on the distribution strategy of that Distributed Hash Table Network, it is decided whether a node will store the block 50 (figure 3) and its Hash Value 49 in their local Hash Table 48 or not.

Still with reference to figure 2, to be able to access a file, not only the blocks of the encrypted file have to be loaded from the various nodes, but also the used secret key 22. This secret key 22 can be concatenated with a random Salt 28. It is transformed into a Split Secret 32 of k parts 33 on base of Shamir's Secret Sharing technique 29. It requires *n* (30) out of *k* (31) parts to reconstruct the original encryption key. The parameter *n* can be set to be the upper rounded value of (2/3*k*) and *k* equals the number of current nodes in the Shared Data Pool.

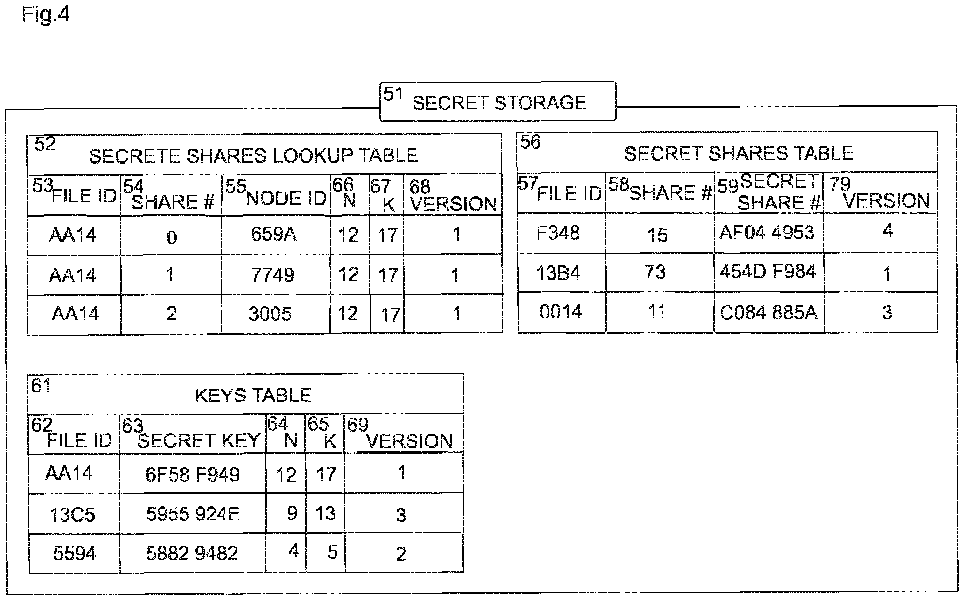

With reference to figure 4, the File ID 62, the values *n* (64) and *k* (65) plus the Version Number of that parameter set 69, and the used Secret Key 63 are stored in the Keys Table 61 of the Secrete Storage 51, 9 of the internal Storage 7 (figure 1).

If during the running of the infrastructure, the number of nodes becomes permanently smaller than *n,* the node that uploaded the file to the Shared Data Pool 1 (figure 1) can re-calculate and re-distribute the Secret Shares as a new version on base a new Salt and new *n* and *k* values. The new Salt value makes the new Secret Shares incompatible to the already distributed shares.

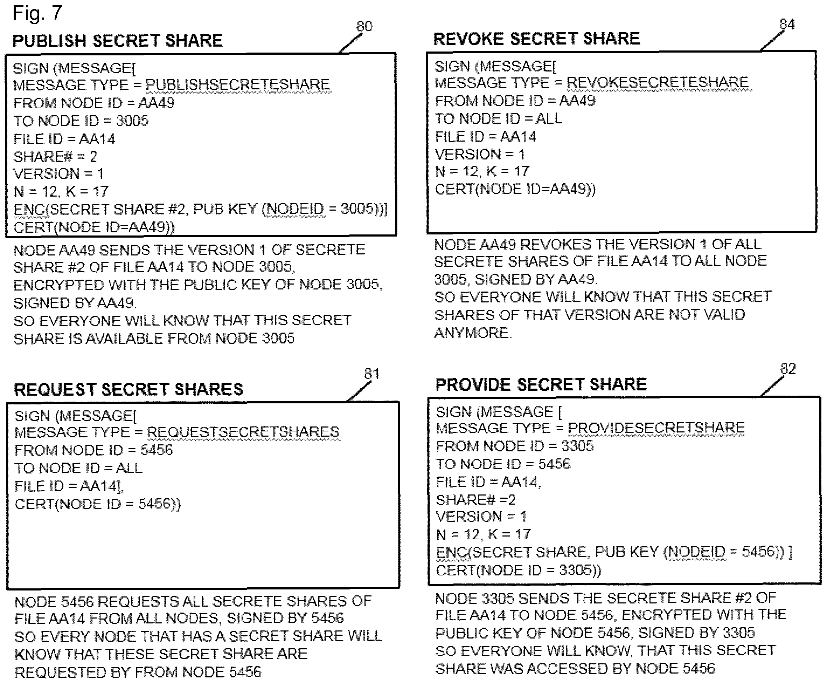

With reference to figure 7, all ***k*** Secret Shares and their Version Number are sent as dedicated messages 80 via the Blockchain Network 4 (figure 1) to the nodes of the Shared Data Pool 1 (figure 1). Each message is encrypted for the recipient with the public key 13 (figure 1) of that recipient so that each partner only has access to one part of the secret. All remaining nodes of the Shared Data Pool will then know that this Secret Share is available from that node.

With reference to figure 4, each node that receives a Secret Share 59 will store it with the File ID 57 and its Share Number 58 and the Version Number 79 in its local Secret Shares Table 56.

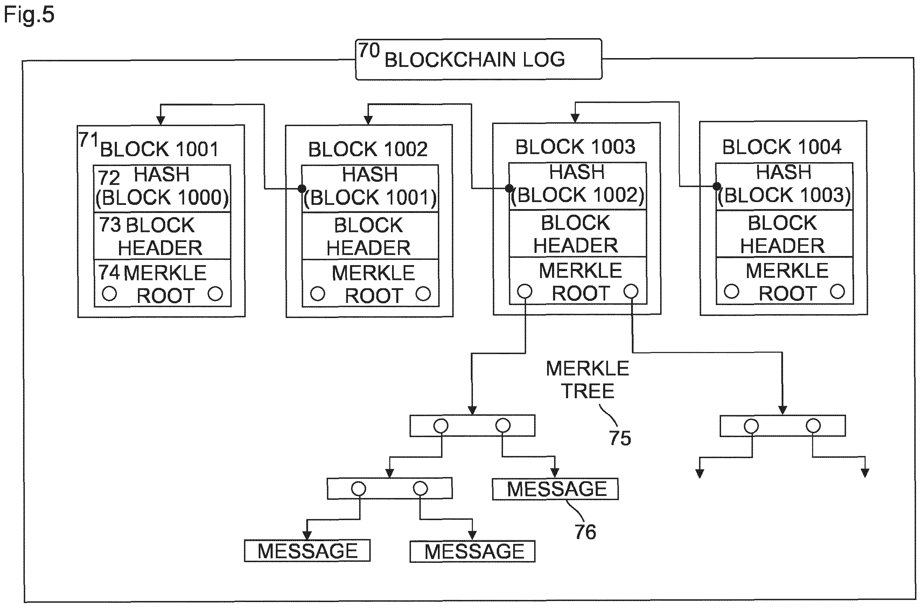

In the messages 80 sending the secret shares to dedicated nodes and stored in the Blockchain 70 (figure 5), it is published which Node ID 55 (figure 4) is responsible for what Share Number 54 (figure 4) of what File ID 53 (figure 4). Additionally, the parameters *n* (66) and *k* (67) that are used to calculate the share are attached plus the Version Number 68 of that parameter set. All information can be digitally signed, e.g. by the use of the certificate, by the Node 5,15 that is publishing that information.

Each node in the Blockchain Network 4 will read that information (File ID 53, Share Number 54, responsible Node ID 55, *n* (66), *k* (67), Version Number 68) and copy it to its local Secret Shares Lookup Table 52 in its Secret Storage 51.

With reference back to figure 1, a partner client 14 who wants to access a file will ask the local Distributed Network Storage 5 to search in the Distributed Hash Table Network 2 for the File ID 42 (figure 3) of a given File Name 60. On basis of the Hash Table Lookup Table 44 and the File ID 45, the Hash Value 47 of each required Block 46 can be determined. On base of that Hash Value 49, the node then downloads the Encrypted File Blocks 50 listed in the Distributed Hash Table Network 2.

With reference to figure 7, the node then sends a request for the secret shares 81 via the Blockchain 70 (figure 5). Each node provides the requested information via a message 82 via the Blockchain Log 70 (figure 5). The messages include information about who accessed what Share of what File 82. The information can be digitally signed, e.g. by the use of the certificate, by the Node 5, 15 that is providing that information.

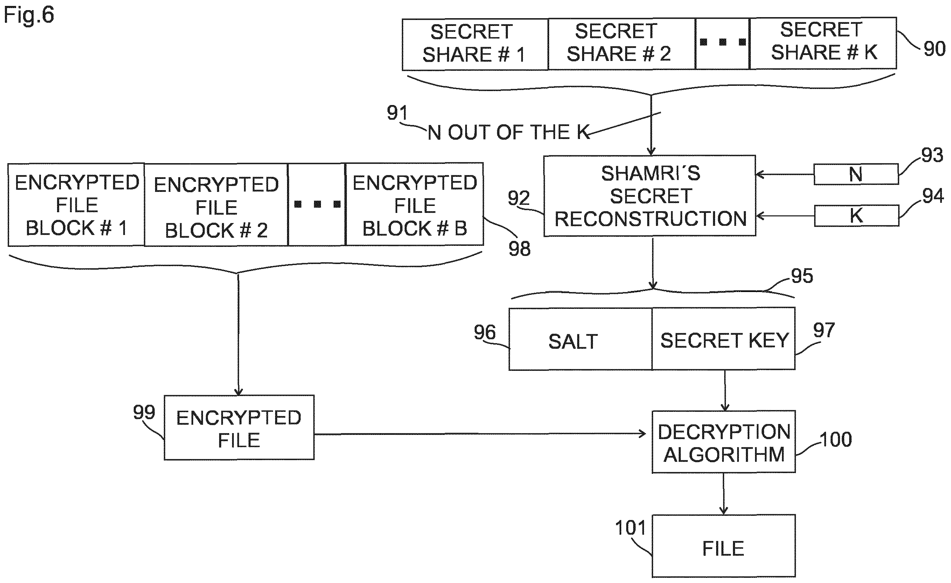

With reference to figure 6, after downloading a minimum of *n* (93) Shares 91 from all *k* (94) Shares 90, the node is able to perform a reconstruction on basis of Shamir's algorithm 92. The result 95 consists of two parts: The random Salt 96 that can be ignored and the Secret Key 97. All blocks that have been downloaded 98 forms the Encrypted File 99. Together with the Secret Key 97 and the use of the decryption Algorithm 100, the original File 101 can be decrypted.

The decrypted file can be stored for future access in the Files Table 41 (figure 3) of the file Storage 40 (figure 3) and made available via a download protocol 16 (figure 1) to the Access Client 11 (figure 1).

In case the number of nodes in the network is becoming lower than the minimal required number of shares *n*, the provider of a file can recalculate and distribute the new secret shares(33) on base of a new salt (28) and new *n* (30) and *k (31).* The node then sends a Revoke Secret Share Message 84 (figure 7) via the Blockchain 70 (figure 5) to revoke the latest version of the secret shares set. This message can also be used to make a file in the Shared Data Pool 1 (figure 1) inaccessible, because there will be no secret shares available to reconstruct the decryption key.

With reference to figure 5, messages (80, 81, 82, 84) are stored in the Blockchain Log (70) inside a message structure (76) as part of a hash tree (74, 75), inside a block (71) that is linked irreversibly to the previous blocks (72), including blockchain-specific administrative information (73).

## Claims

1. Method of distributing and retrieving data on a computer network (2, 4) with peer nodes (5, 15), comprising:
(a)encrypting, with a secret key (22), a file (20) containing said data;
(b)splitting (24) the encrypted file (23) into blocks (25, 50) and splitting (32) the secret key (22) into secret shares (33, 59);
(c) distributing the blocks (50) and the secret shares (59) to the peer nodes (5, 15);
(d)upon request of a client (11) to access the file (20), retrieving via one of the peer nodes (5, 15) the encrypted blocks (50, 98) for reconstructing the encrypted file (23), retrieving at least some of the secret shares (59, 90) for reconstructing the secret key (22, 97), and decrypting the encrypted file (23, 99) with the reconstructed secret key (97);
**characterized in that**
the peer nodes (5, 15) share a blockchain (10, 70) so as to form a blockchain network (4);
at step (c), the secret shares (33, 59) are transmitted to the peer nodes (5, 15) via messages (80) sent over the blockchain network (4); and at step (d), requesting and retrieving the secret shares (59, 90) is done via messages (81, 82) sent over the blockchain network (4).

2. Method according to claim 1, wherein in each message (80, 81, 82) of transmittal, request and retrieval of the secret shares (59, 90) at steps (c) and (d), respectively, said secret shares (59, 90) are encrypted with a public key (13) of the peer node (5, 15) that is the recipient of said message.

3. Method according to one of claims 1 and 2, wherein each message (80, 81, 82) of transmittal, request and retrieval of the secret shares (59, 90) at steps (c) and (d), respectively, contains information identifying the peer node (5, 15) sending the message, identifying the peer node(s) recipient (5, 15) of said message, and identifying the secret share (59, 90) that is transmitted or retrieved, said information being publicly accessible to all peer nodes (5, 15) of the network (2, 4), preferably wherein the information identifying the secret share (59, 90) in each message (80, 81, 82) of transmittal, request and retrieval of the secret shares (33, 59, 90) at steps (c) and (d), respectively, identifies the number (54, 58) of the secret share (33, 59, 90) in relation with the secret key (22), and the file (42, 60, 43) associated with said secret share.

4. Method according to claim 3, wherein the information identifying the secret share (33, 59, 90) in each message (80, 81, 82) of transmittal, request and retrieval of the secret shares (33, 59, 90) at steps (c) and (d), respectively, identifies the version (68, 69, 79) of the secret share, preferably wherein a version (68, 69, 79) of secret shares can be revoked by a message (84) send from one of the peer nodes to all remaining nodes.

5. Method according to any one of claims 1 to 4, wherein each message (80, 81, 82) of transmittal, request and retrieval of the secret shares (33, 59, 90) at steps (c) and (d), respectively, is digitally signed by the peer node that sends the message.

6. Method according to any one of claims 1 to 5, wherein step (d) comprises sending a message (81) of request of secret shares, from one of the peer nodes to all remaining peer nodes, prior to sending messages (82) of retrieval of said secret shares, from said remaining peer nodes.

7. Method according to any one of claims 1 to 6, wherein the blockchain log (10, 70) contains all messages (80, 81, 82, 84) of transmittal, request and retrieval of the secret shares at steps (c) and (d), respectively, preferably wherein the messages (80, 81, 82, 84) are contained in a hash tree of the blockchain (70).

8. Method according to any one of claims 1 to 7, wherein at step (b), a salted (28) secret key (22) is split into *k* secret shares (33, 59) on the basis a Secret Sharing technique where *n* secret shares, *n*<*k,* are sufficient for reconstructing the secret key (22, 63, 97), preferably wherein *kl2<n≤3*/*4k* and *k>2.*

9. Method according to claim 8, wherein each message (80, 81, 82) of transmittal, request and retrieval of the secret shares (33, 59, 90) at steps (c) and (d), respectively, contains information identifying the secret share, and the values *n* and *k* and the version of said secret share.

10. Method according to any one of claims 1 to 9, wherein each peer node (5, 15) comprises a unique identifier (12), a data storage space (7), a networks manager (6), a public key (13), preferably provided inside a certificate, and a private key (14), preferably wherein at step (c) the blocks (50) and the secret shares (59) are stored on the data storage space (7) of the peer nodes (5, 15).

11. Method according to any one of claims 1 to 10, wherein at step (a) the secret key (22) is randomly generated, preferably with salts (23).

12. Method according to any one of claims 1 to 11, wherein at step (c) the blocks (50) are associated and distributed to peer nodes (5, 15) based on a distributed hash algorithm, step (c) producing a distributed network (2).

13. A computer program comprising instructions that are executable by a computer, **characterized in that** the instructions are configured for executing the steps of the method according to any one of claims 1 to 12 when running on said computer.

14. Computer data storage server (5), preferably of the Network-Attached Storage type, with storage medium (7) and **characterized in that** the storage medium stores a computer program according to claim 13.

15. A computer network (2, 4) with peer nodes (5, 15), each peer node (5, 15) comprising a unique identifier (12), a data storage space (7), a networks manager (6), a public key (13), preferably provided inside a certificate, and a private key (14); each networks manager (6) comprising means configured for executing the steps of method according to any one of claims 1 to 12.

## Patentansprüche

1. Verfahren zum Verteilen und Wiederauffinden von Daten in einem Computernetzwerk (2, 4) mit Peer-Knoten (5, 15), umfassend Folgendes:
(a) Verschlüsselung einer Datei (20), die diese Daten enthält, mit einem geheimen Schlüssel (22);
(b) Aufteilen (24) der verschlüsselten Datei (23) in Blöcke (25, 50) und Aufteilen (32) des geheimen Schlüssels (22) in geheime Teile (33, 59);
(c) Verteilung der Blöcke (50) und der geheimen Teile (59) an die Peer-Knoten (5, 15);
(d) auf Anfrage eines Clients (11) auf die Datei (20) zuzugreifen, Abruf der verschlüsselten Blöcke (50, 98) über einen der Peer-Knoten (5, 15) zur Rekonstruktion der verschlüsselten Datei (23), Abruf zumindest einiger der geheimen Teile (59, 90) zur Rekonstruktion des geheimen Schlüssels (22, 97) und Entschlüsselung der verschlüsselten Datei (23, 99) mit dem geheimen Schlüssel (97);
**dadurch gekennzeichnet, dass**
die Peer-Knoten (5, 15) sich eine Blockkette (10, 70) teilen, um ein Blockketten-Netzwerk (4) zu bilden;
in Schritt (c) die geheimen Teile (33, 59) an die Peer-Knoten (5, 15) über Nachrichten (80) übertragen werden, die über das Blockketten-Netzwerk (4) gesendet werden; und in Schritt (d) die Anforderung und der Abruf der geheimen Teile (59, 90) über Nachrichten (81, 82) erfolgt, die über das Blockketten-Netzwerk (4) gesendet werden.

2. Verfahren nach Anspruch 1, wobei in jeder Nachricht (80, 81, 82) der Übertragung, Anforderung und Wiedergewinnung der geheimen Teile (59, 90) in den Schritten (c) bzw. (d) die geheimen Teile (59, 90) mit einem öffentlichen Schlüssel (13) des Peer-Knotens (5, 15) verschlüsselt werden, der der Empfänger der Nachricht ist.

3. Verfahren nach einem der Ansprüche 1 und 2, bei dem jede Nachricht (80, 81, 82) der Übertragung, Anforderung und des Abrufs der geheimen Teile (59, 90) in den Schritten (c) bzw. (d) Informationen enthält, die den Peer-Knoten (5, 15), der die Nachricht sendet, den oder die Peer-Knoten (5, 15), die den oder die Empfänger (5, 15) der Nachricht identifizieren, und den geheimen Teil (59, 90), der übertragen oder abgerufen wird, identifizieren, wobei die Informationen für alle Peer-Knoten (5,15) des Netzwerks (2, 4) öffentlich zugänglich sind, wobei vorzugsweise die Information, die den geheimen Teil (59, 90) in jeder Nachricht (80, 81, 82) der Übertragung, Anforderung und Wiedergewinnung der geheimen Teile (33, 59, 90) in den Schritten (c) bzw. (d) identifiziert, die Nummer (54, 58) des geheimen Teils (33, 59, 90) in Bezug auf den geheimen Schlüssel (22) und die Datei (42, 60, 43), die mit dem geheimen Teil verknüpft ist, identifiziert.

4. Verfahren nach Anspruch 3, wobei die Information, die den geheimen Teil (33, 59, 90) in jeder Nachricht (80, 81, 82) der Übertragung, Anforderung und Wiedergewinnung der geheimen Teile (33, 59, 90) in den Schritten (c) bzw. (d) identifiziert, die Version (68, 69, 79) des geheimen Teils identifiziert, wobei eine Version (68, 69, 79) der geheimen Teile vorzugsweise durch eine Nachricht (84) widerrufen werden kann, die von einem der Peer-Knoten an alle übrigen Knoten gesendet wird.

5. Verfahren nach einem der Ansprüche 1 bis 4, wobei jede Nachricht (80, 81, 82) der Übertragung, Anforderung und Wiedergewinnung der geheimen Teile (33, 59, 90) in den Schritten (c) bzw. (d) von dem Peer-Knoten, der die Nachricht sendet, digital signiert wird.

6. Verfahren nach einem der Ansprüche 1 bis 5, wobei der Schritt (d) das Senden einer Nachricht (81) zur Anforderung von geheimen Teilen von einem der Peer-Knoten an alle verbleibenden Peer-Knoten vor dem Senden von Nachrichten (82) zum Abrufen der geheimen Teile von den verbleibenden Peer-Knoten umfasst.

7. Verfahren nach einem der Ansprüche 1 bis 6, wobei das Blockketten-Protokoll (10, 70) alle Nachrichten (80, 81, 82, 84) der Übertragung, Anforderung und Wiedergewinnung der geheimen Teile in den Schritten (c) bzw. (d) enthält, wobei die Nachrichten (80, 81, 82, 84) vorzugsweise in einem Hash-Baum der Blockkette (70) enthalten sind.

8. Verfahren nach einem der Ansprüche 1 bis 7, wobei in Schritt (b) ein salted (28) geheimer Schlüssel (22) in *k* geheime Teile (33, 59) auf Grundlage einer geheimen Teilungstechnik aufgeteilt wird, wobei *n* geheime Teile, *n*<*k,* zur Rekonstruktion des geheimen Schlüssels (22, 63, 97) ausreichen, vorzugsweise wobei *k*/*2<n≤3*/*4k* und *k>2.*

9. Verfahren nach Anspruch 8, wobei jede Nachricht (80, 81, 82) der Übertragung, Anforderung und Wiedergewinnung der geheimen Teile (33, 59, 90) in den Schritten (c) bzw. (d) Informationen enthält, die den geheimen Teil und die Werte *n* und *k* sowie die Version des geheimen Teils identifizieren.

10. Verfahren nach einem der Ansprüche 1 bis 9, wobei jeder Peer-Knoten (5, 15) einen eindeutigen Identifier (12), einen Datenspeicherplatz (7), einen Netzwerkmanager (6), einen öffentlichen Schlüssel (13), der vorzugsweise innerhalb eines Zertifikats vorgesehen ist, und einen privaten Schlüssel (14) umfasst, wobei vorzugsweise in Schritt (c) die Blöcke (50) und die geheimen Teile (59) auf dem Datenspeicherplatz (7) der Peer-Knoten (5, 15) gespeichert werden.

11. Verfahren nach einem der Ansprüche 1 bis 10, wobei in Schritt (a) der geheime Schlüssel (22) zufällig erzeugt wird, vorzugsweise mit Salts (23).

12. Verfahren nach einem der Ansprüche 1 bis 11, wobei in Schritt (c) die Blöcke (50) zugeordnet und auf Grundlage eines verteilten Hash-Algorithmus an Peer-Knoten (5, 15) verteilt werden, wobei Schritt (c) ein verteiltes Netzwerk (2) erzeugt.

13. Computerprogramm mit Befehlen, die von einem Computer ausführbar sind, **dadurch gekennzeichnet, dass** die Befehle zur Ausführung der Schritte des Verfahrens gemäß einem der Ansprüche 1 bis 12 ausgelegt sind, wenn sie auf dem Computer laufen.

14. Computerdatenspeicher-Server (5), vorzugsweise vom Typ Network Attached Storage mit Speichermedium (7) und **dadurch gekennzeichnet, dass** das Speichermedium ein Computerprogramm nach Anspruch 13 speichert.

15. Computernetzwerk (2, 4) mit Peer-Knoten (5, 15), wobei jeder Peer-Knoten (5, 15) einen eindeutigen Identifier (12), einen Datenspeicherplatz (7), einen Netzwerkmanager (6), einen öffentlichen Schlüssel (13), der vorzugsweise innerhalb eines Zertifikats bereitgestellt wird, und einen privaten Schlüssel (14) umfasst; wobei jeder Netzwerkmanager (6) Mittel umfasst, die zum Ausführen der Verfahrensschritte gemäß einem der Ansprüche 1 bis 12 ausgelegt sind.

## Revendications

1. Procédé de distribution et d'extraction de données sur un réseau informatique (2, 4) comprenant des nœuds homologues (5, 15), comprenant le fait de :
(a) chiffrer, avec une clé secrète (22), un fichier (20) contenant lesdites données ;
(b) répartir (24) le fichier chiffré (23) en blocs (25, 50) et répartir (32) la clé secrète (22) en parts secrètes (33, 59) ;
(c) distribuer les blocs (50) et les parts secrètes (59) aux nœuds homologues (5, 15) ;
(d) à la demande d'un client (11) qui souhaite accéder au fichier (20), extraire par l'intermédiaire d'un des nœuds homologues (5, 15) les blocs chiffrés (50, 98) afin de rétablir le fichier chiffré (23) en extrayant au moins un certain nombre des parts secrètes (59, 90) pour le rétablissement de la clé secrète (22, 97), et déchiffrer le fichier chiffré (23, 99) avec la clé secrète reconstruite (97) ;
**caractérisé en ce que**
les nœuds homologues (5, 15) partagent une chaîne de blocs (10, 70) pour ainsi former un réseau de chaînes de blocs (4) ;
à l'étape (c), les parts secrètes (33, 59) sont transmises aux nœuds homologues (5, 15) par l'intermédiaire de messages (80) envoyés sur le réseau de chaînes de blocs (4) ; et
à l'étape (d), la demande et l'extraction concernant les parts secrètes (59, 90) sont réalisées par l'intermédiaire de messages (81, 82) envoyés sur le réseau de chaînes de blocs (4).

2. Procédé selon la revendication 1, dans lequel, dans chaque message (80, 81, 82) de transmission, de demande et d'extraction des parts secrètes (59, 90) aux étapes (c) et (d), respectivement, lesdites parts secrètes (59, 90) sont chiffrées avec une clé publique (13) du nœud homologue (5, 15) qui représente le destinataire dudit message.

3. Procédé selon l'une quelconque des revendications 1 et 2, dans lequel, chaque message (80, 81, 82) de transmission, de demande et d'extraction des parts secrètes (59, 90) aux étapes (c) et (d), respectivement, contient des informations qui identifient le nœud homologue (5, 15) qui envoie le message, qui identifient le(s) nœud(s) homologue(s) récepteur(s) (5, 15) dudit message, et qui identifient la part secrète (59, 90) qui est transmise ou extraite, lesdites informations étant accessibles publiquement par l'ensemble des nœuds homologues (5, 15) du réseau (2, 4) ; de préférence dans lequel les informations qui identifient la part secrète (59, 90) dans chaque message (80, 81, 82) de transmission, de demande et d'extraction des parts secrètes (33, 59, 90) aux étapes (c) et (d), respectivement, identifient le numéro (54, 58) de la part secrète (33, 59, 90) en lien avec la clé secrète (22) et avec le fichier (42, 60, 43) associé à ladite part secrète.

4. Procédé selon la revendication 3, dans lequel les informations qui identifient la part secrète (59, 90) dans chaque message (80, 81, 82) de transmission, de demande et d'extraction des parts secrètes (33, 59, 90) aux étapes (c) et (d), respectivement, identifient la version (68, 69, 79) de la part secrète ; de préférence, dans lequel une version (68, 69, 79) des parts secrètes peut être abrogée par un message (84) envoyé à partir d'un des nœuds homologues à l'ensemble des nœuds restants.

5. Procédé selon l'une quelconque des revendications 1 à 4, dans lequel chaque message (80, 81, 82) de transmission, de demande et d'extraction des parts secrètes (33, 59, 90) aux étapes (c) et (d), respectivement, fait l'objet d'une signature numérique par le nœud homologue qui envoie le message.

6. Procédé selon l'une quelconque des revendications 1 à 5, dans lequel l'étape (d) comprend le fait d'envoyer un message (81) de demande de parts secrètes, à partir d'un des nœuds homologues à tous les nœuds homologues restants, avant d'envoyer des messages (82) d'extraction desdites parts secrètes, à partir desdits nœuds homologues restants.

7. Procédé selon l'une quelconque des revendications 1 à 6, dans lequel le journal (10, 70) de la chaîne de blocs contient tous les messages (80, 81, 82, 84) de transmission, de demande et d'extraction des parts secrètes aux étapes (c) et (d), respectivement; de préférence, dans lequel les messages (80, 81, 82, 84) sont contenus dans un arbre de hachage de la chaîne de blocs (70).

8. Procédé selon l'une quelconque des revendications 1 à 7, dans lequel, à l'étape (b), une clé secrète (22) salée (28) est divisée en k parts secrètes (33, 59) sur la base d'une technique de Partage de Secrets dans laquelle *n* parts secrètes, *n*<*k*, sont suffisantes pour le rétablissement de la clé secrète (22, 63, 97), de préférence dans lequel *k*/*2<n≤3*/*4k* et *k>2.*

9. Procédé selon la revendication 8, dans lequel chaque message (80, 81, 82) de transmission, de demande et d'extraction des parts secrètes (33, 59, 90) aux étapes (c) et (d), respectivement, contient des informations qui identifient la part secrète, ainsi que les valeurs *n* et *k* et la version de ladite part secrète.

10. Procédé selon l'une quelconque des revendications 1 à 9, dans lequel chaque nœud homologue (5, 15) comprend un identifiant unique (12), un espace (7) réservé à la mise en mémoire de données, un gestionnaire de réseaux (6), une clé publique (13), de préférence prévue à l'intérieur d'un certificat, et une clé privée (14) ; de préférence, dans lequel, à l'étape (c), les blocs (50) et les parts secrètes (59) sont mis en mémoire dans l'espace (7) des nœuds homologues (5, 15), réservé à la mise en mémoire de données.

11. Procédé selon l'une quelconque des revendications 1 à 10, dans lequel, à l'étape (a), la clé secrète (22) est générée de manière aléatoire, de préférence avec des sels (23).

12. Procédé selon l'une quelconque des revendications 1 à 11, dans lequel, à l'étape (c), les blocs (50) sont associés et sont distribués à des nœuds homologues (5, 15) en se basant sur un algorithme de hachage distribué, l'étape (c) produisant un réseau distribué (2).

13. Programme informatique comprenant des instructions qui peuvent être exécutées par un ordinateur, **caractérisé en ce que** les instructions sont configurées pour la mise en œuvre des étapes du procédé selon l'une quelconque des revendications 1 à 12, lorsqu'il est exécuté sur ledit ordinateur.

14. Serveur de mémorisation de données informatiques (5), de préférence du type d'une mémorisation en réseau, comprenant un support de mémorisation (7), et **caractérisé en ce que** le support de mémorisation met en mémoire un programme informatique selon la revendication 13.

15. Réseau informatique (2,4) comprenant des nœuds homologues (5, 15), chaque nœud homologue (5,15) comprenant un identifiant unique (12), un espace (7) réservé à la mise en mémoire de données, un gestionnaire de réseaux (6), une clé publique (13), de préférence prévue à l'intérieur d'un certificat, et une clé privée (14) ; chaque gestionnaire de réseaux (6) comprenant des moyens pour la mise en œuvre des étapes du procédé selon l'une quelconque des revendications 1 à 12.
